# FASCICULE DE BREVET EUROPEEN

(11) **EP 1 275 554 B1**
(45) Date de publication et mention de la délivrance du brevet: **09.08.2006**
(21) Numéro de dépôt: 02291614.2
(22) Date de dépôt: 28.06.2002
(51) Int. Cl.: B60N 2/48

(54) **Appui-tête réglable pour un siège notamment pour un siège de véhicule automobile**
Verstellbare Kopfstütze für einen Sitz, insbesondere für einen Kraftfahrzeugsitz
Adjustable head rest for a seat, especially for an automotive vehicle seat

(30) Priorité: 03.07.2001 FR 0108802
(43) Date de publication de la demande: 15.01.2003
(73) Titulaire: Peugeot Citroen Automobiles, 92200 Neuilly Sur Seine (FR)
(72) Inventeur: Moussy, Gael, 25260 Montenois (FR)
(74) Mandataire: De Cuenca, Emmanuel Jaime

(56) Documents cités:
- WO-A-97/11860
- DE-A- 19 644 086
- FR-A- 2 129 447
- GB-A- 1 537 551

## Description

La présente invention concerne un appui-tête réglable en orientation, destiné à être fixé au dossier d'un siège, en particulier d'un siège pour véhicule automobiles (cf. par exemple GB-A-1537551, correspondant an préambule de la revendication independante).

Elle concerne plus particulièrement un appui-tête du type comprenant un bras en forme de U dont chacune des branches est adaptée pour être introduite dans un logement pratiqué dans le siège, et une matelassure adaptée pour pivoter autour de la base du bras.

Dans les véhicules automobiles actuellement connus, les appui-têtes réglables en orientation qui sont fixés au dossier des sièges ne permettent pas à tous les utilisateurs, conducteur ou passagers, d'avoir leur nuque reposant confortablement sur la face avant de la matelassure. En d'autres termes, une fois assis dans son siège, l'utilisateur n'a pas nécessairement la nuque correctement maintenue.

Pour pallier à cet inconvénient, différentes solutions ont déjà été proposées. Parmi celles-ci, certaines prévoient d'implanter le mécanisme de pivotement permettant d'incliner l'appui-tête vers l'avant ou l'arrière du véhicule, directement à l'intérieur même de l'appui-tête.

Les mécanismes ainsi proposés sont soit des mécanismes comportant deux axes d'articulation soit des mécanismes comportant des pièces articulées entre elles en formant un pantographe.

Les mécanismes à deux axes d'articulation comportent un axe en partie supérieure de l'appui-tête, qui permet d'écarter ou de rapprocher la partie de la matelassure formant face avant de la partie formant face arrière de l'appui-tête, et un deuxième axe en partie inférieure de l'appui-tête qui permet d'incliner vers l'avant ou l'arrière du véhicule la face arrière de l'appui-tête. Ces mécanismes sont compliqués à fabriquer car le nombre de pièces utilisées est également imporatant.

Les mécanismes comportant des pièces articulées entre elles en formant un pantographe sont également compliqués à fabriquer car le nombre de pièces utilisées est important.

Le but de l'invention est alors de proposer un appui-tête réglable en orientation dans lequel est implanté un mécanisme de pivotement, qui permette à tout utilisateur assis sur le siège d'avoir la nuque confortablement positionnée sur l'appui-tête et qui soit simple à fabriquer.

Pour ce faire, l'invention telle que définie dans la revendication indépendante a pour objet un appui-tête réglable en orientation, destiné à être fixé au dossier d'un siège, en particulier d'un siège pour véhicule automobile, comprenant un bras en forme de U dont chacune des branches est adaptée pour être introduite dans un logement pratiqué dans le siège, et une matelassure adaptée pour pivoter autour de la base du bras, remarquable en ce qu'il comprend un boitier autour duquel la matelassure est disposée, ledit boitier comprenant une partie supérieure évidée dans laquelle sont pratiquées au moins deux rainures adaptées pour loger la base du bras et, dans laquelle est insérée au moins une lame ressort adaptée pour maintenir la base du bras pivotant dans une rainure.

Avantageusement, le boitier comprend une partie inférieure autour de laquelle sont disposées les faces avant et arrière de la matelassure dont une est adaptée pour servir de face d'appui à la nuque de l'utilisateur assis sur le siège.

Avantageusement encore, la partie supérieure évidée du boitier comprend trois rainures parallèles entre elles.

Selon une caractéristique avantageuse de l'invention, la section du bras est circulaire et chaque rainure a une forme semi-circulaire dont le diamètre est légèrement supérieur à celui du bras.

Selon une autre caractéristique de l'invention, la partie supérieure évidée du boitier comprend deux lames ressort parallèles entre elles et disposées sensiblement perpendiculaires aux rainures.

Leur déformation sous l'effet de la pression de la base du bras est ainsi rendue plus aisée lorsque l'utilisateur cherche à déplacer la base du bras d'une rainure à une autre pour adapter la position de l'appui-tête à sa propre position et à sa posture.

De préférence, le boitier est noyé dans la matelassure.

L'invention concerne également un siège de véhicule automobile comprenant un dossier sur lequel est fixé un appui-tête tel que décrit précédemment.

D'autres détails et caractéristiques avantageuses de l'invention seront mieux compris à la lecture de la description détaillée d'un exemple selon l'invention faite en référence aux figures suivantes :
- figures 1 et 1a : une vue en coupe transversale et une vue partielle en perpective d'un appui-tête selon l'invention;
- figures 2a à 2d : des vues en coupe transversale de l'appui-tête selon la figure 1 représentant différentes phases de réglage;
- figures 3a et 3b: des vues en coupe transversale de l'appui-tête représentant toutes les plages angulaires pouvant être prises par celui-ci.

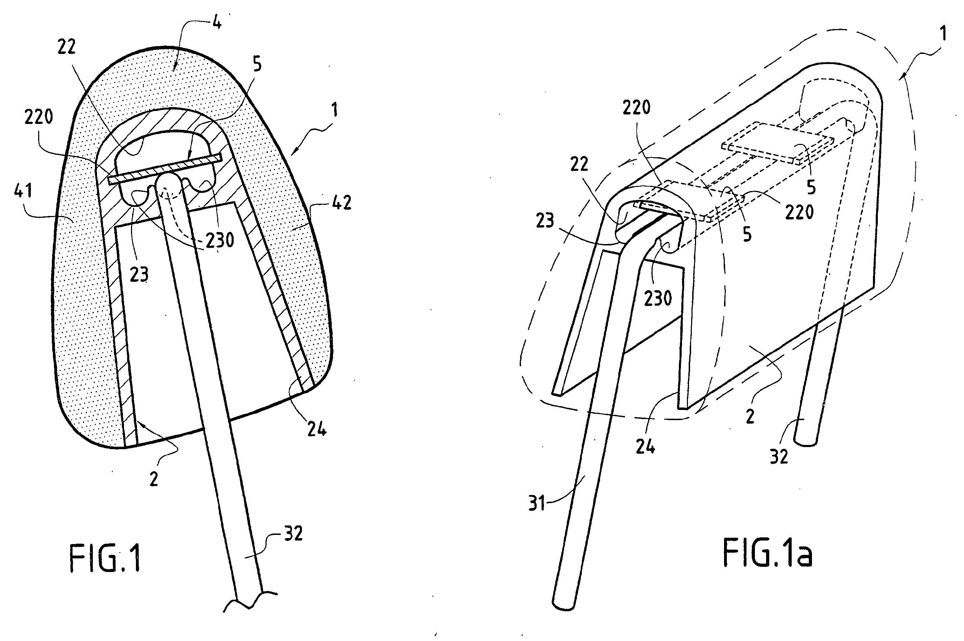

L'appui-tête 1 selon l'invention montré à la figure 1 comprend un boitier 2 dans lequel est inséré un bras 3 en forme générale de U dont chacune des branches 31,32 est adaptée pour être introduite dans un logement pratiqué dans le siège non représenté et qui est noyé dans une matelassure 4 faite en un matériau connu pour cette application tel que de la mousse de polyuréthane.

Ce boitier 2 comprend une partie supérieure évidée 21 dont chaque paroi latérale 22 présente deux fentes 220 de section rectangulaire, chaque fente 220 étant en regard d'une autre.Cette partie supérieure évidée 21 comprend également une paroi inférieure 23 dans laquelle sont pratiquées trois rainures 230 longitudinales de section semi-circulaire parallèles entre elles.

Ce boitier 2 comprend également une partie inférieure 24 de section transversale en forme de tronc de cône et de section longitudinale rectangulaire. Les faces avant 41 et arrière 42 de la matelassure 4 sont disposées autour du boitier 2, la face avant 41 servant de face d'appui à la nuque de l'utilisateur assis sur le siège.

Deux lames ressort 5 parallèles entre elles sont disposées sensiblement perpendiculaires aux rainures 230.

La base 33 du bras 3 est logée dans l'une des rainures 230 en étant maintenue par les deux lames ressort 5.

Le fonctionnement de l'appui-tête ainsi décrit va maintenant être expliqué.

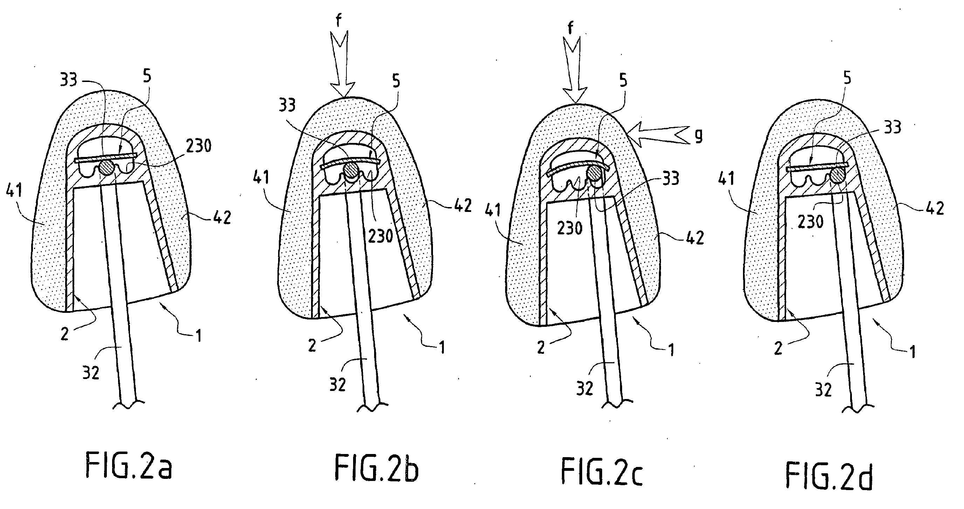

Pour incliner l'appui-tête selon l'invention lorsqu'il est dans une position donnée, c'est-à-dire lorsque la base 33 du bras 3 est dans une rainure 230 donnée, telle que celle du milieu (figure 2a), l'utilisateur applique un effort sur la face avant 41 ou arrière 42 de la matelassure 4 et le boitier 2 tourne alors autour de la base 33 du bras 3. L'effort de rotation ainsi que la tenue de l'appui-tête en position est alors assuré par le frottement de la rainure 230 considérée sur la base 33 du bras 3 engendré par la pression qu'exercent les lames ressort 5 sur celui-ci.

Lorsqu'un autre utilisateur désire adapter la position de l'appui-tête à sa propre position et à sa posture sur le siège, il peut en plus de l'inclinaison de l'appui-tête décrite ci-dessus modifier la position du boitier 2 et venir loger la base 33 dans une autre rainure (figure 2d). Pour cela, il applique un effort vertical vers le bas de la matelassure 4, selon la flèche f représentée à la figure 2b. La base 33 du bras 3 exerce alors un effort sur les lames ressort 5 qui se déforment en glissant légèrement dans les fentes 220 et permettent ainsi à la base 33 du bras 3 de sortir de la rainure dans laquelle il était logé, telle que celle du milieu sur la figure 2b.

Puis il doit appliquer un autre effort sur l'une des faces de la matelassure 4, telle que la face arrière 42 selon la flèche g sur la figure 2c, tout en maintenant l'effort appliqué sur le haut de la matelassure 4. Cet autre effort décale alors le boitier 2 par rapport à la base 33 du bras 3 afin que celui-ci vienne au dessus d'une autre rainure 230, telle que la rainure 230 la plus proche de la face arrière 42 de la matelassure 4.

L'utilisateur cesse alors d'appliquer les efforts sur la matelassure 4 et les lames ressort 5 ramènent alors la rainure 230 désirée vers la base 33 du bras 3.

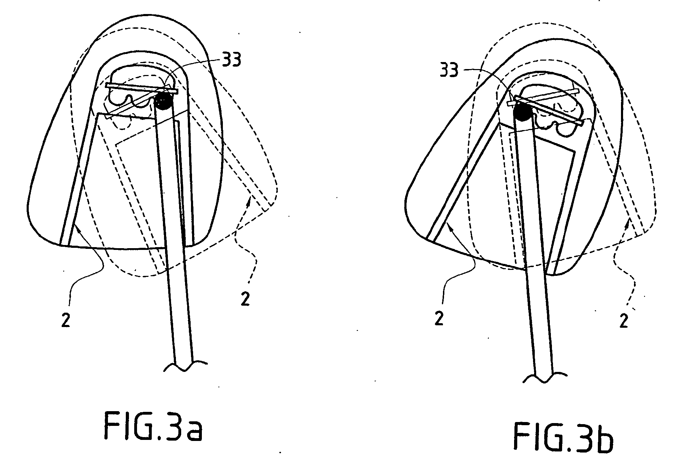

Avec un tel appui-tête, n'importe quel utilisateur peut, quelle que soit sa taille, sa position et sa posture sur le siège, reposer sa nuque confortablement, comme on peut le voir sur la figure 3. Sur cette figure, sont représentées les différentes positions en traits pointillés prises par l'appui-tête lorsque la base 33 du bras 3 est dans la rainure 230 la plus proche de la face avant 41 de la matelassure 4, tandis qu'en traits pleins sont représentées celles prises par l'appui-tête lorsque la base 33 est dans la rainure la plus éloignée.

L'invention permet donc de multiplier les positions de la base 33 du bras 3 et donc de déplacer, à souhait, les plages de réglage angulaires de manière à adapter la position de l'appui-tête à toutes les morphologies des utilisateurs, tels que les passagers ou le conducteur d'un véhicule automobile qui en est équipé.

L'invention est avantageuse car l'appui-tête qui vient d'être décrit peut être fixé à tous types de dossiers de siège existants.

Bien entendu, il va de soi que différentes améliorations peuvent être apportées à l'appui-tête qui vient d'être décrit sans pour autant sortir du cadre de l'invention. Ainsi, le boitier 2 peut comporter plusieurs autres rainures 230 lorsque le volume de l'appui-tête est plus important pour pouvoir par exemple s'adapter à un dossier de siège plus large.

## Revendications

1. Appui-tête (1) réglable en orientation, destiné à être fixé au dossier d'un siège, en particulier d'un siège pour véhicule automobile, comprenant un bras (3) en forme de U dont chacune des branches (31,32) est adaptée pour être introduite dans un logement pratiqué dans le siège, et une matelassure (4) adaptée pour pivoter autour de la base du bras, ledit appuitête (1) comprenant un boitier (2) autour duquel la matelassure est disposée, ledit boitier (2) comprenant une partie supérieure évidée (21) dans laquelle sont pratiquées au moins deux rainures (230), **caractérisé en ce que** lesdites rainutres (230) sout adaptées pour loger la base (33) du bras (3) et **en ce que** dans ladite partie supérieure évidée (21) est insérée au moins une lame ressort (5) adaptée pour maintenir la base du bras pivotant dans une rainure.

2. Appui-tête (1) selon la revendication 1, **caractérisé en ce que** le boitier comprend une partie inférieure (24) autour de laquelle sont disposées les faces avant (41) et arrière (42) de la matelassure dont une (41) est adaptée pour servir de face d'appui à la nuque de l'utilisateur assis sur le siège.

3. Appui-tête selon la revendication 1 ou 2, **caractérisé en ce que** la partie supérieure évidée du boitier (21) comprend trois rainures (230) parallèles entre elles.

4. Appui-tête selon l'une des revendications précédentes, **caractérisé en ce que** la section du bras est circulaire et **en ce que** chaque rainure a une forme semi-circulaire dont le diamètre est légèrement supérieure à celui du bras.

5. Appui-tête selon l'une des revendications précédentes, **caractérisé en ce que** la partie supérieure évidée du boitier comprend deux lames ressort (5) parallèles entre elles et disposées sensiblement perpendiculaires aux rainures.

6. Appui-tête selon l'une des revendications précédentes, **caractérisé en ce que** le boitier est noyé dans la matelassure.

7. Siège de véhicule automobile comprenant un dossier sur lequel est fixé un appui-tête selon l'une des revendications précédentes.

## Claims

1. Head-rest (1), adjustable in orientation, intended to be fixed to a seat back, in particular a seat for a motor vehicle, comprising a U-shaped arm (3), each of the branches (31, 32) of which is adapted to be introduced into a housing made in the seat, and padding (4) adapted to pivot about the base of the arm, said head-rest (1) comprising a housing (2) around which the padding is arranged, said housing (2) comprising a hollowed-out upper portion (21) in which at least two grooves (230) are made, **characterised in that** said grooves (230) are adapted to house the base (33) of the arm (3) and **in that**, into said hollowed-out upper portion (21) is inserted at least one spring leaf (5) adapted to keep the base of the arm pivoting in a groove.

2. Head-rest (1) according to Claim 1, **characterised in that** the housing comprises a lower portion (24) around which are arranged the front (41) and back (42) faces of the padding, one (41) of which is adapted to serve as the face for supporting the nape of the neck of the user sitting on the seat.

3. Head-rest according to Claim 1 or 2, **characterised in that** the hollowed-out upper portion of the housing (21) comprises three grooves (230) parallel to each other.

4. Head-rest according to one of the preceding claims, **characterised in that** the section of the arm is circular and **in that** each groove has a semicircular shape, the diameter of which is slightly greater than that of the arm.

5. Head-rest according to one of the preceding claims, **characterised in that** the hollowed-out upper portion of the housing comprises two spring leaves (5) parallel to each other and arranged substantially perpendicular to the grooves.

6. Head-rest according to one of the preceding claims, **characterised in that** the housing is embedded in the padding.

7. Motor vehicle seat comprising a back to which is fixed a head-rest according to one of the preceding claims.

## Patentansprüche

1. Kopfstütze (1) mit einstellbarer Ausrichtung, die an der Rückenlehne eines Sitzes, insbesondere eines Kraftfahrzeugsitzes, befestigt wird und einen Arm (3) in Form eines U, dessen Zweige (31, 32) in eine Aufnahme im Sitz eingeführt werden können, sowie eine Polsterung (4) aufweist, die um die Basis des Arms verschwenken kann, wobei die Kopfstütze (1) ein Gehäuse (2) aufweist, um das herum die Polsterung angeordnet ist und das einen ausgehöhlten oberen Abschnitt (21) umfasst, in dem mindestens zwei Nuten (230) vorgesehen sind, **dadurch gekennzeichnet, dass** die Nuten (230) die Basis (33) des Arms (3) aufnehmen können und **dadurch**, dass in den ausgehöhlten oberen Abschnitt (21) mindestens ein Federblatt (5) eingefügt ist, das die Basis des Schwenkarms in einer Nut halten kann.

2. Kopfstütze (1) nach Anspruch 1, **dadurch gekennzeichnet, dass** das Gehäuse einen unteren Abschnitt (24) aufweist, um den herum die Vorderseite (41) und die Hinterseite (42) der Polsterung angeordnet sind, von denen eine Seite (41) als Auflagefläche für den Nacken des auf dem Sitz sitzenden Benutzers dient.

3. Kopfstütze nach Anspruch 1 oder 2, **dadurch gekennzeichnet, dass** der ausgehöhlte obere Abschnitt des Gehäuses (21) drei zueinander parallele Nuten (230) aufweist.

4. Kopfstütze nach einem der vorhergehenden Ansprüche, **dadurch gekennzeichnet, dass** der Querschnitt des Arms kreisförmig ist und dass jede Nut die Form eines Halbkreises aufweist, dessen Durchmesser etwas größer als der des Arms ist.

5. Kopfstütze nach einem der vorhergehenden Ansprüche, **dadurch gekennzeichnet, dass** der ausgehöhlte obere Abschnitt des Gehäuses zwei zueinander parallele Federblätter (5) aufweist, die im Wesentlichen senkrecht zu den Nuten angeordnet sind.

6. Kopfstütze nach einem der vorhergehenden Ansprüche, **dadurch gekennzeichnet, dass** das Gehäuse in der Polsterung versenkt ist.

7. Kraftfahrzeugsitz mit einer Rückenlehne, an der eine Kopfstütze nach einem der vorhergehenden Ansprüche befestigt ist.
